# EUROPEAN PATENT SPECIFICATION

(11) **EP 3 976 454 B1**
(45) Date of publication and mention of the grant of the patent: **26.02.2025**
(21) Application number: 20730113.6
(22) Date of filing: 29.05.2020
(51) Int. Cl.: B62K 5/05, B60G 17/005, B60G 21/00, B62K 5/08, B62K 5/10, B62K 5/027, B62K 5/00, B62K 25/04

(54) **ROLLING MOTOR VEHICLE WITH TILT-BLOCKING SYSTEM ACTING ON THE SHOCK ABSORBER**
ROLLENDES KRAFTFAHRZEUG MIT AUF DEN STOSSDÄMPFER WIRKENDES KIPPBLOCKIERUNGSSYSTEM
VÉHICULE À MOTEUR ROULANT AVEC SYSTÈME DE BLOCAGE D'INCLINAISON AGISSANT SUR L'AMORTISSEUR

(30) Priority: 03.06.2019 IT 201900007881
(43) Date of publication of application: 06.04.2022
(73) Proprietor: Piaggio & C. S.P.A., 56025 Pontedera Pisa (IT)
(72) Inventor: RAFFAELLI, Andrea, 56025 Pontedera (PI) (IT); ROSELLINI, Walter, 56025 Pontedera (PI) (IT)
(74) Representative: Mannucci, Michele
(86) International application number: PCT/IB2020/055116
(87) International publication number: WO 2020/245712

(56) References cited:
- EP-A1- 2 248 691
- EP-A1- 3 124 365
- EP-A1- 3 321 158
- WO-A1-2018/207066
- US-A1- 2014 375 015

## Description

### TECHNICAL FIELD

The present invention relates to the field of rolling motor vehicles, i.e., motor vehicles provided with a tilting movement about a median plane that extends longitudinally along the vehicle. Embodiments described herein relate to saddle vehicles with three or more wheels.

### BACKGROUND ART

In the field of motor vehicles there is an increasing offer of vehicles that combine the features of two wheeled saddle vehicles (motorcycles and scooters, for example) in terms of handling, with the stability of four wheeled vehicles. These vehicles include three wheeled motor vehicles provided with two front steered wheels and one rear driving wheel, and four wheeled motor vehicles, typically referred to as QUAD bikes.

More in detail, the aforesaid three wheeled motor vehicles are provided with two front steered wheels, i.e., adapted to steer the vehicle controlled by the rider by means of the handlebar, and rolling, i.e., laterally tiltable with a rolling movement. The rolling movement is an tilting movement about an axis substantially oriented in the direction of movement. Three wheeled vehicles further comprise a rear driving wheel, mechanically connected to the motor and having the purpose of providing the torque and hence of allowing traction, while the paired front wheels have the purpose of providing the directionality of the vehicle.

In addition to the steering movement, the paired front wheels are provided with a rolling movement and are connected to the vehicle frame by means of shock absorber suspensions, which allow a springing movement. As a result of the use of two paired front wheels, a rolling vehicle has, with respect to a motor vehicle with only two wheels, greater stability guaranteed by the double contact of the front wheels with the ground, similarly to that provided by a car.

The front wheels are connected to each other by means of mechanisms that allow the wheels to roll and steer substantially synchronously, for example through the interposition of one or two four bar linkages that connect the front wheels to a forecarriage frame. These motor vehicles are also frequently provided with two separate shock absorber suspensions, one for each front steered wheel. Each suspension has an elastic element (spring) and a viscous element (shock absorber).

Although three or four wheeled rolling motor vehicles have high stability, in certain conditions they can fall over due to an uncontrolled rolling movement. This can occur in particular when moving forward at low speed, or when the vehicle is stationary or parked. To prevent this problem, three and four wheeled tilting motor vehicles are often provided with a roll-blocking or roll control system, which prevents the motor vehicle from accidentally falling over when stationary or moving forward at low speed. Three wheeled motor vehicles with roll-blocking or roll control system are for example disclosed in EP1561612 and in EP1571016.

EP1561612, in particular, discloses a three wheeled tilting vehicle, with a forecarriage having a four bar linkage with two superimposed cross members extending in a right-left direction and hinged centrally to the vehicle frame. The ends of the cross members are joined to each other by a left upright and by a right upright. Each upright is connected to a support arm of a respective front steered wheel. A suspension is interposed between each support arm and the respective front wheel.

The roll-blocking system comprises a gripper that blocks the four bar linkage with respect to the vehicle frame, preventing pivoting thereof. Moreover, the roll-blocking system comprises, for each suspension, a suspension locking member. The two suspension locking members and the gripper for blocking the linkage are controlled by a hydraulic actuator.

The roll-blocking system described above is safe and efficient. However, it is neither particularly compact nor inexpensive.

EP3321158 discloses a tilting vehicle having two front steered wheels and a rolling four bar linkage corresponding to the preamble of claim 1. Each front steered wheel has a respective suspension. The roll-blocking system is similar to the one disclosed in EP1571016.

WO-A-2018207066 discloses a shock absorber having a bidirectional selective block used to block the rolling movement. The shock absorber comprises a main cylinder, having a piston sliding in the main cylinder. The piston divides the interior of the main cylinder in a first chamber and a second chamber. The first chamber is fluidly coupled with a secondary cylinder, parallel to the main cylinder, through a first duct. The second chamber is fluidly coupled to the secondary cylinder through a second duct. In the second cylinder a damping valve is arranged, comprising a stationary apertured plate, which controls the flow of incompressible viscous liquid from the first chamber to the second chamber and vice versa, through the first duct and the second duct as a consequence of the displacement of the piston in the main cylinder. In order to block the shock absorber a double valve is provided, which simultaneously closes both the first duct and the second duct, thus preventing fluid circulation through the stationary apertured plate.

This known system is efficient, but still has some drawbacks, in particular in relation to the overall size. Moreover, the system of the current art requires two cylinders arranged side-by-side and of the same length, which increases the cost of the device and places some limitations to the suspension design, in particular having regard to the position of the spring.

It would be useful to have a roll-blocking system which is equally effective, but which overcomes the problems of prior art devices. In particular, a roll-blocking system that requires a smaller number of actuators and is therefore simpler, less costly and more compact would be useful.

### SUMMARY OF THE INVENTION

To solve or limit one or more of the problems of rolling motor vehicles of the current art, a rolling motor vehicle according to claim 1 is provided. The dependent claims concern further features and embodiments of the vehicle according to the invention.

The motor vehicle comprises a four bar linkage with cross members extending in a right-left direction with respect to a median plane of the motor vehicle, and support arms of the two front steered wheels, with which respective suspensions are associated. The leaning movement (rolling movement) of the motor vehicle causes deformation of the four bar linkage. The motor vehicle comprises a roll-blocking system of the rolling movement, which in turn comprises a four bar linkage locking device and a locking device of the suspension of the two front steered wheels.

Advantageously, the suspension locking device comprises, for each of said suspensions, a valve adapted to at least partially close a duct connecting a chamber of a cylinder of the shock absorber, inside which a piston of the shock absorber slides, and a tank, preventing the flow of viscous fluid between the chamber and the tank.

In the present context the term "block/lock", referring to the movement of the four bar linkage or to the movement of the suspensions must be understood in the sense of also comprising a controlling action that limits these movements. For example, as the movement of the suspensions is blocked by means of a valve that prevents the passage of viscous fluid from a cylinder of the shock absorber to a tank, block is meant both as total closing of this passage and as a substantial reduction thereof. In this latter case, a limited capacity for movement of the suspensions remains, for example to allow springing of the front steered wheels when subjected to high stress.

Advantageously, in embodiments disclosed herein the valve is operated by an electrically controlled actuator. This simplifies control of the valve, which can be configured as a solenoid valve.

In advantageous embodiments, the roll-blocking system comprises, in addition to the suspension locking device, a four bar linkage locking device. This locking device can advantageously comprise a brake adapted to block the movement of the four bar linkage with respect to the frame. In advantageous embodiments, the brake comprises an electrically controlled electromechanical actuator, preferably comprising a non-reversible gear motor, i.e. which remains in active position, with the brake blocked, when the electric motor of the gear motor is switched off. In this way, the four bar linkage locking device remains active when the motor vehicle is switched off, without consuming electricity.

In advantageous embodiments, to obtain a compact and inexpensive structure, the brake of the four bar linkage locking device can comprise a gripper, an electric motor and a reduction gear, integrated in a single housing.

Further advantageous features of the motor vehicle of the present invention are described hereunder, with reference to some non-limiting exemplary embodiment, and in the accompanying drawings.

### BRIEF DESCRIPTION OF THE DRAWINGS

The invention will be better understood by following the description and the accompanying drawings, which illustrate a non-limiting example of embodiment of the invention. More in particular, in the drawing:
Fig. 1 shows an axonometric view of a motor vehicle with three tilting wheels comprising an roll-blocking system according to the present invention;
Fig.2 shows a longitudinal section of a suspension with related suspension movement locking device;
Fig.3 a sectional view of a suspension according to a further embodiment; and
Fig.4 shows a side view of the brake of the four bar linkage locking device.

### DETAILED DESCRIPTION

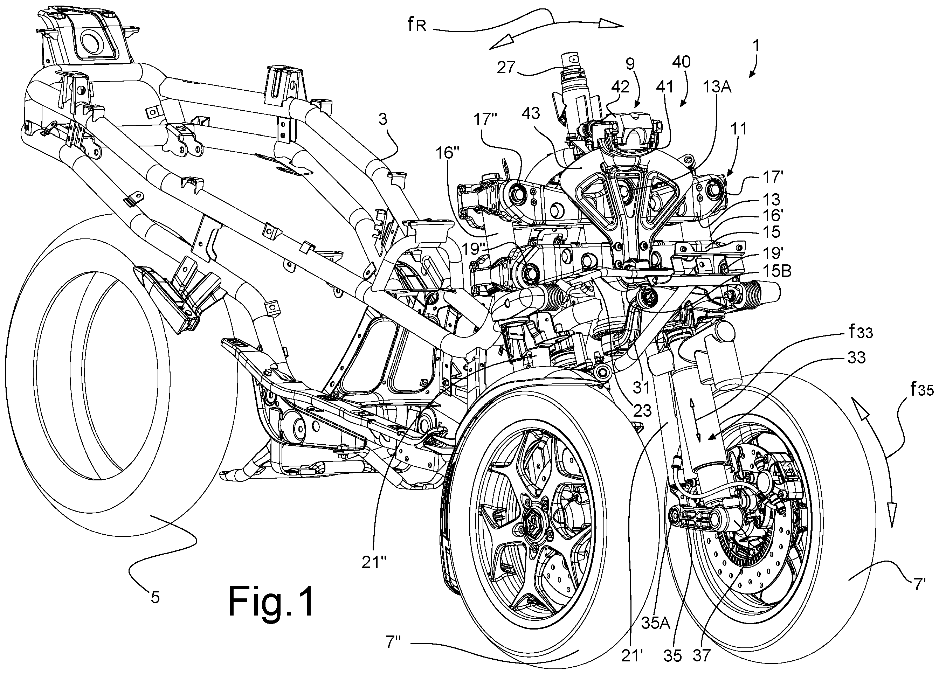

Fig.1 illustrates an axonometric view of a motor vehicle 1, which comprises a roll-blocking system according to the present invention. The motor vehicle of Fig.1 is illustrated with parts removed, for greater simplicity of representation. In particular, the casing, the saddle, the motor and the handlebar are omitted. In general terms, the roll-blocking system comprises a suspension locking device and a four bar linkage locking device.

In brief, the motor vehicle 1 comprises a frame 3, a rear driving wheel 5, mechanically connected to a motor (not shown) that supplies the torque, and a pair of front steered wheels. More in particular, the motor vehicle 1 comprises a first front steered wheel 7', or left front steered wheel 7', and a second front steered wheel 7", or right front steered wheel 7". Hereunder, components, assemblies or elements that are symmetrical with respect to a median plane of the motor vehicle 1 are indicated with the same reference numeral followed by an apostrophe (') for the elements on the left side of the median plane M, and by two apostrophes (") for the elements on the right side of the median plane M.

In the embodiment illustrated in Fig. 1, the front part of the motor vehicle 1, hereinafter also referred to as forecarriage, is provided with a steering mechanism, indicated as a whole with 9, which allows the front steered wheels 7' and 7" to perform synchronous steering and rolling movements. In the present context, steering movement is meant as the movement of the front wheels 7', 7" about respective steering axes. By means of the steering movement a variation in the trajectory is imparted to the motor vehicle 1 with respect to a rectilinear trajectory in forward direction. In the present context, rolling movement means the movement that allows the motor vehicle 1 to tilt with respect to a vertical plane, for example when the vehicle travels around a bend.

In the illustrated embodiment, the steering mechanism 9 comprises a four bar linkage 11, more specifically an parallelogram four bar linkage, hereinafter indicated as rolling four bar linkage 11. The rolling four bar linkage 11 has a first upper cross member 13 and a second lower cross member 15, substantially parallel to each other. The upper cross member 13 and the lower cross member 15 extend according to the left-right direction, transversely to the median plane.

The two cross members 13, 15 are hinged to the frame 3 in two intermediate points by means of hinges 13A and 15A, respectively. In this way, the two cross members 13 and 15 can rotate about respective rotation axes parallel to each other and lying on the median plane M of the frame 3 of the vehicle 1, to perform a rolling movement, for example when the motor vehicle 1 travels around a bend at speed.

The rolling four bar linkage 11 further comprises two uprights, respectively a left upright 16' and a right upright 16". The two uprights 16', 16" are hinged to the upper cross member 13 and to the lower cross member 15 to form therewith the rolling four bar linkage. The reference numerals 17', 19' and 17", 19" indicate hinges on the two sides of the vehicle 1, by means of which the uprights 16' and 16" are hinged to the cross members 13, 15. More in particular, the upper cross member 13 is hinged at a first (left) end by means of the hinge 17' to the left upright 16' and at a second (right) end by means of the hinge 17" to the right upright 16". Likewise, the lower cross member 15 is hinged at a first (left) end by means of the hinge 19' to the left upright 16' and at a second (right) end by means of the hinge 19" to the right upright 16". The hinges 17', 17" and 19', 19" define mutual rotation axes of the cross members 13, 15 and of the uprights 16', 16". The rotation axes defined by the hinges 17', 17" and 19', 19" are parallel to the rotation axes of the cross members 13, 15 with respect to the frame 3.

, In addition to the rolling four bar linkage 11, the steering mechanism 9 comprises a pair of support arms, to which the front steered wheels 7', 7" are connected. More precisely, a left support arm 21' supports the left front steered wheel 7' and a right support arm 21" supports the right front steered wheel 7".

In the illustrated embodiment, the two support arms 21', 21" are structured as half forks, but it must be understood that other configurations are possible. Each support arm 21', 21" is connected to the rolling four bar linkage 11 so as to be able to rotate about a respective steering axis.

In the illustrated embodiment, each support arm 21', 21" is housed at the top inside the respective upright 16', 16" of the rolling four bar linkage 11. For this purpose, the two uprights 16', 16" can be formed with a hollow cylindrical body, inside which bearings(not shown) of the support arms 21' 21" of the wheels 7', 7" are mounted.

To control the steering movement of the two support arms 21', 21" about the steering axes, a transverse component 23 extending in a right-left direction is provided. In the embodiments illustrated herein, the transverse component 23 forms a steering bar, i.e., a bar that transmits the steering movement from the steering column to the two support arms 21', 21" and hence to the two front steered wheels 7', 7". Hereunder the transverse component 23 will therefore be referred to as steering bar 23

The steering bar 23 is movable controlled by a steering column 27 operated by means of a handlebar (not shown) of the motor vehicle 1. The steering column 27 is connected in a central point to the steering bar 23, by means of a transmission 31. Rotation of the handlebar 29 about the axis of the steering column 27 causes the translation of the steering bar 23. The steering bar 23 is connected by means of end couplings to the two support arms 21', 21" of the front steered wheels 7', 7", which rotate simultaneously about the steering axes when the bar translates as a result of the control imparted by the handlebar and by the steering column 27. Vice versa, a tilting, i.e., rolling, movement of the motor vehicle 1, schematically indicated by the double arrow R in Fig.1, causes a rotation of the steering bar 23 with respect to the support arms 21', 21" about respective rolling axes.

In general, rolling and steering movements occur simultaneously during travel. When the motor vehicle 1 is stationary, as will be clarified hereunder, it is advisable to block the rolling movement, leaving the steering movement free and for this purpose the roll-blocking system, described in detail hereunder, is provided.

Each front steered wheel 7', 7" is connected to the respective support arm 21', 21" by means of a suspension, the left of which indicated with 33 is visible in Fig.1. The right suspension (which in Fig.1 is covered by the wheel 7") is symmetrical with respect to the left suspension. Each suspension connects the respective front steered wheel 7', 7" to the arm 21', 21" allowing the wheel to perform springing movements. In Fig.1 the springing movement is indicated with f33 and involves a compression and extension of the suspension 33. The front steered wheel 7', 7" is connected to the respective support arm 21', 21" by means of a rocker arm, indicated with 35 in Fig.1 for the left front steered wheel 7'. The rocker arm 35 is hinged to the respective support arm 21' so as to pivot about a pivoting axis 35A. The distal end of the rocker arm 35 supports the hub 37 of the left front steered wheel 7'. The right front steered wheel 7" has a symmetrical suspension arrangement, not visible in Fig.1 as covered by the wheel 7".

To block the rolling movement of the motor vehicle 1 both the movement of the rolling four bar linkage 11, and the springing movement of the suspensions 33 must be blocked.

To block the movement of the rolling four bar linkage 11 a four bar locking device is provided. In some currently preferred embodiments, the four bar linkage locking device comprises a brake 40, carried by the frame 3 of the motor vehicle 1. In some embodiments the brake 40 comprises a gripper 41 with an actuator, for example electromechanical, electromagnetic or hydraulic, schematically indicated with 42. The gripper acts on a disc sector 43 rigidly connected to one of the components of the rolling four bar linkage 11. In the illustrated embodiment the disc sector 43 is rigidly connected to the lower cross member 17 of the rolling four bar linkage 11.

When the brake 40 is activated, the gripper 41 blocks the disc sector 43 and thus prevents the rolling movement of the rolling four bar linkage 11 with respect to the frame 3 of the motor vehicle 1.

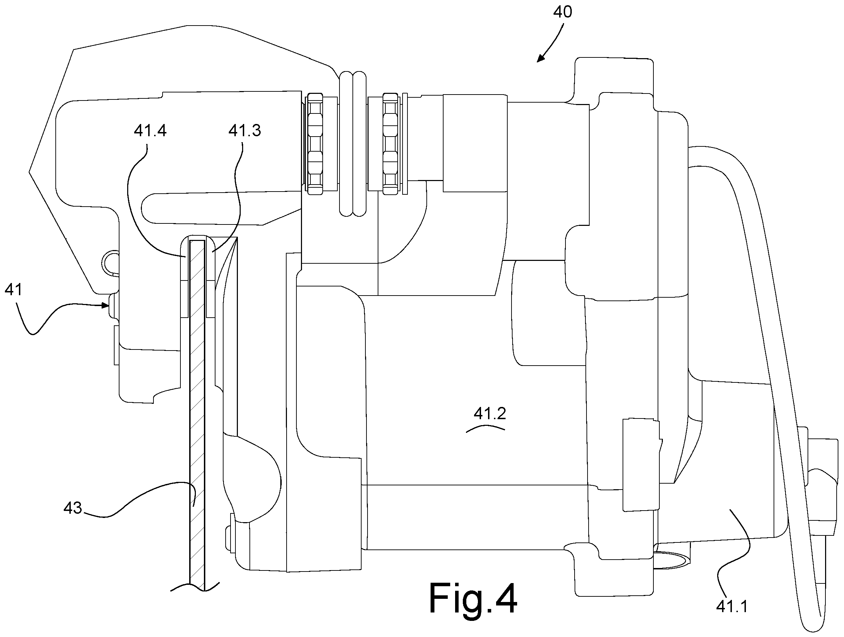

Fig.4 shows a side view of the brake 40 with the gripper 41. In the illustrated embodiment, the gripper 41 is operated by an electric motor 41.1, associated with which is a reduction gear 41.2 that transmits the rotary motion of the electric motor 41.1 to a brake jaw 41.3 that co-acts with a brake jaw 41.4. The two brake jaws 41.3 and 41.4 act on opposite faces of the disc sector 43 to brake it. The gripper 41 can be floating so that by moving the jaw 41.3 against the disc sector 43 by means of the electric motor 41.1, a pressure of the opposite jaw 41.4 is also obtained. The reduction gear 41.2 is advantageously non-reversible, in the sense that once the gripper 41 of the brake has been closed by means of the motor 41.1, the gripper remains blocked even with the motor switched off. Opening of the gripper requires activation of the motor 41.1 in the reverse direction.

Advantageously, as can be seen in Fig.4, the gripper 41 with the actuator, comprising the electric motor 41.1 and the reduction gear 41.2, is formed as an integrated component, where a same housing contains the electric motor 41.1, the reduction gear 41.2, and the jaws 41.3 and 41.4 of the gripper.

The arrangement illustrated in Fig.4 is particularly advantageous as it gives rise to a very compact and low cost four bar linkage locking device.

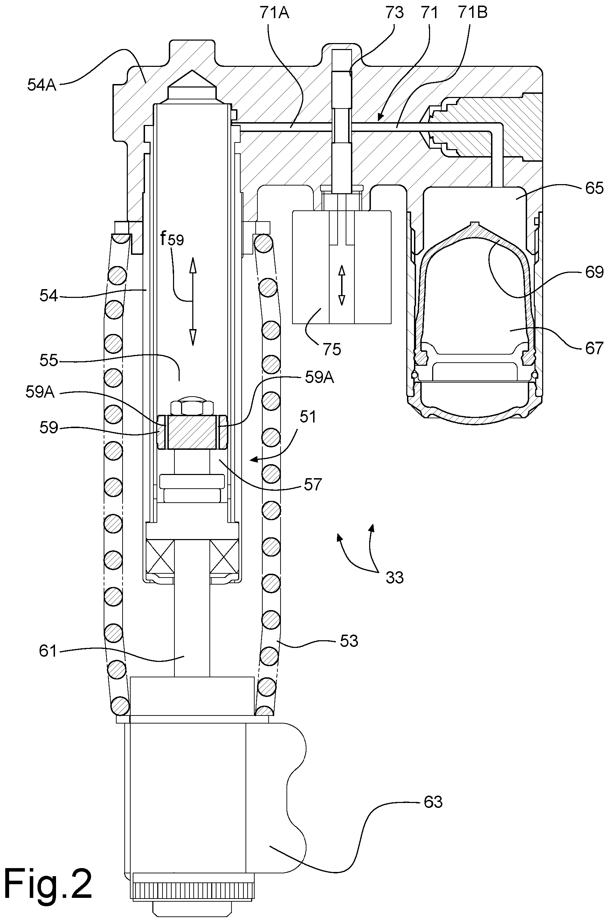

To block the springing movement of the suspensions a suspension locking device is provided. In the embodiment described herein, the suspension locking device uses a particular configuration of the hydraulic shock absorber of each of said suspensions. Fig.2 shows a section according to a longitudinal plane of an exemplary embodiment of a suspension 33 that can be used to block the springing movement.

The suspension 33 comprises a shock absorber 51 and an elastic element 53, for example a coil spring. In the illustrated embodiment the shock absorber 53 comprises a cylinder 54, internally divided into a first chamber 55 and a second chamber 57 by a sliding piston 59 housed in the cylinder 54. The piston is connected to a rod 61 that extends through the chamber 57. The chambers 55 and 57 are filled with a viscous fluid, typically oil. The cylinder 54 and the piston 59 of the shock absorber 51 are connected to two elements that must move with respect to each other to follow the springing movement. In the illustrated example, the rod 61 of the piston 59 is fixed to a connection block 63, by means of which the suspension 33 is constrained to the rocker arm 35 or other element that follows the springing movement of the respective front steered wheel 7' or 7". The head 54A of the cylinder 54 is fixed to the support arm 21' or 21" of the respective front steered wheel 7' or 7".

The piston 59 of the shock absorber 51 has flow orifices or passages 59A that connect the chambers 55 and 57 into which the piston 59 internally divides the cylinder 54. In the embodiment flow orifices through the piston 59 are provided.

The compression and extension movement of the suspension 33 causes a compression and extension of the spring 53 and a sliding of the piston 59 according to the double arrow f59 with retraction and extraction of the rod 61. The damping effect of the springing movement provided by the shock absorber 51 is obtained as a result of the resistance offered by the flow orifices 59A to the outflow of oil from one to the other of the chambers 55 and 57.

When the piston 59 slides in the cylinder 54, a variable length of the rod 61 partially occupies the volume of the chamber 57, reducing or increasing the total volume available for the oil inside the cylinder 54, i.e., of the two chambers 55 and 57. Therefore, when the piston 59 moves away from the head 54A of the cylinder causing an increase in the volume of the chamber 55 and a reduction in the volume of the chamber 57, oil flows from the chamber 57 to the chamber 55 through the flow orifices 59A. However, as a part of the volume of the chamber 57 is occupied by the rod 61, the amount of oil that flows from the chamber 57 into the chamber 55 as a result of the reduction in the volume of the chamber 57 is less than the increase in the volume available for the oil in the chamber 55. The opposite occurs when the piston 59 slides in the cylinder 54 toward the head 54A of the cylinder, reducing the volume of the chamber 55 and increasing the volume of the chamber 57. In this case the reduction in the volume of the chamber 55 tends to expel a volume of oil from the chamber 55 that is greater than the volume that can be received in the chamber 57.

To offset this difference between the volume made available for the oil in one chamber and the volume of oil expelled from the other, the chamber 55 is in fluid communication with a third chamber or tank 65, which forms an auxiliary tank for the viscous fluid of the shock absorber 33. A part of the tank 65 is occupied by a compressible volume 67, for example containing gas. The compressible volume 67 can be separated from the oil contained in the tank 65 by means of a movable or deformable component. In the illustrated example, the separation between the oil (or other incompressible viscous fluid) and the gas (compressible fluid) is provided by a deformable diaphragm 69, for example made of rubber. In other embodiments the tank 65 can be divided into two volumes by a piston or rigid moving diaphragm.

The tank 65 and the first chamber 55 are connected to each other by means of a duct 71 in which a valve 73 is arranged, which divides the duct into two portions 71A and 71B. In some embodiments, more than one duct can be provided in parallel, in which case one or more valves are provided to selectively open and close all the ducts that connect the first chamber 55 to the tank 65. The valve can be controlled by an actuator 75, for example of electric or electromagnetic type.

During normal operation of the motor vehicle 1, when the rolling movement and the springing movement must be free, the valve 73 is held by the actuator 75 in an open position. In this way an oil, or other incompressible viscous fluid, can flow out of the first chamber 55 into the tank 65 and vice versa, in order to offset the variation in the total volume of oil contained in the cylinder 54. More in particular, when the suspension 33 contracts and the rod 61 penetrates the cylinder 54, a part of the oil flows out of the first chamber 55 into the tank 65. The compressible volume 67 is reduced. Vice versa, when the rod 61 exits from the cylinder 54, increasing the volume inside the cylinder 54 that must be occupied by the oil, an amount of oil flows through the duct 71 out of the tank 65 into the first chamber 55.

When the suspension locking device requires to be activated, the actuator 75 operates the valve 73, closing the duct 71, so that oil can no longer flow out of the first chamber 55 into the tank 65 and vice versa. A compression of the suspension 33 is not possible, as oil cannot be expelled from the cylinder 54 to create the additional volume that should be occupied by the rod 61 that penetrates the cylinder 54. An extension movement (elongation) of the suspension 33 is not possible as the greater volume made available by extraction of the rod 61 cannot be filled by oil coming from the chamber 65.

Consequently, the movement of the piston 59 in the cylinder 54 is prevented and therefore in substance the springing movement of the suspension 33 is inhibited.

The actuator 75 can be an electromagnetic actuator, for example a solenoid.

In some embodiments, the actuator 75 can be a bi-stable actuator, i.e., provided with two stable positions, respectively open and closed.

In other embodiments, for reasons of safety the actuator 75 can be configured to be normally open and require an electrical control to close it. This ensures that in case of failure the valve remains open, preventing accidental or unwanted activation of the block of the springing movement of the suspension.

A single electrical control unit can control the entire roll-blocking system: the two actuators 75 that operate the valves 73 of the two suspensions 33, and the actuator 42. This provides a very simple configuration of the entire roll-blocking system, which is less costly, more compact and very reliable. When the motor vehicle 1 is stationary, or moving at very low speed, or when it is parked, the roll-blocking system can be activated, so that the motor vehicle can remain in an erect position, preventing rolling movements, i.e., tilting that could cause the motor vehicle 1 to fall over. When the motor vehicle is moving the roll-blocking system is deactivated and the motor vehicle 1 can perform normal rolling movements, for example on a bend. The electrical control unit can receive signals from numerous sensors of the vehicle, for example from the speed sensors of the front wheels and from the motor control unit. In particular, the motor control unit can provide the electrical control unit of the roll-blocking system with indications regarding opening of the throttle valve or of the number of revolutions of the motor. The electrical control unit is configured to process the signals of the sensors, and the signal coming from the handlebar control for blocking/releasing rolling operated by the driver, and to process an output signal that operates said roll-blocking system. In particular, in advantageous embodiments, the roll release signal comprises a dual release signal, the first directed at each suspension locking device and the second directed at the four bar linkage locking device. The same occurs with the block signal. For reasons of safety, the electrical control unit can generate a release signal upon reaching given conditions of the motor vehicle. For example, the roll-blocking system can be released when the number of motor revolutions exceeds a predetermined threshold, or if the speed of at least one of the two front wheels exceeds a predetermined safety speed, or if the driver operates the throttle valve via the handlebar accelerator.

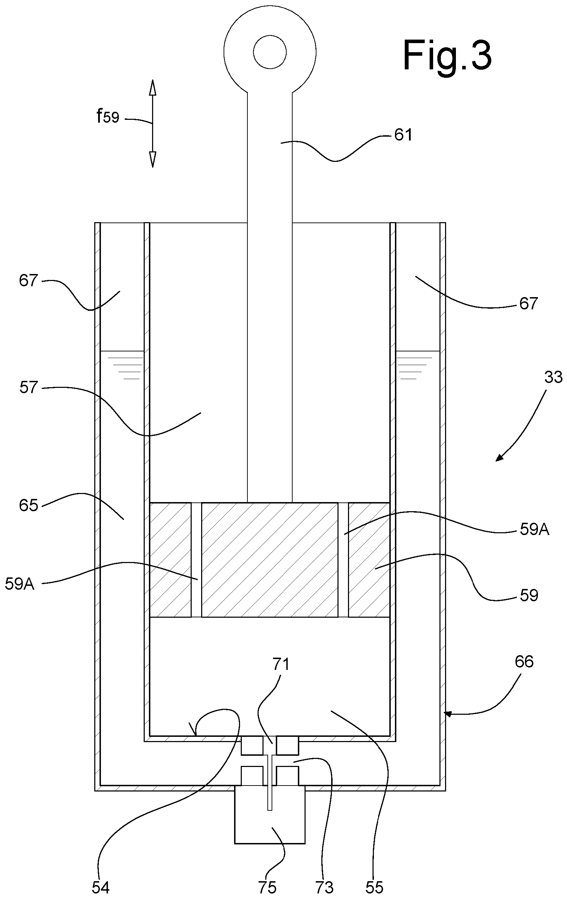

The embodiment described above uses a mono-tube shock absorber with an external tank 65 and a valve between the external tank and the tube (inside the cylinder 54) to control blocking of the springing movement. This solution is particularly advantageous, as the shock absorber thus obtained is very efficient. However, the concept on which the suspension locking device disclosed herein is based can also be implemented with two-tube or twin tube shock absorbers, which have the configuration schematically indicated in Fig. 3. The same numbers in Fig.3 indicate the same or functionally equivalent components to those described above with reference to Fig.2.

In the two-tube configuration, the tank 65 containing the compressible fluid 67 is in the form of an annular volume delimited by an outer sleeve 66 that surrounds the cylinder 54. The annular volume between the outer sleeve 66 and the cylinder 54 is partially filled with oil (incompressible fluid) in the lower part thereof, indicated with 65 and partially with a gas (compressible fluid) in the upper part thereof, indicated with 67. At the bottom, a duct 71 with a valve 73 places the chamber 55 in fluid communication with the tank defined between the sleeve 66 and the cylinder 54. The fluid communication is provided in the lower area of the volume between cylinder 54 and sleeve 66 where oil collects by gravity, so that oil can pass through the duct 71 from and toward the chamber 55. Also in this case, the springing movement of the suspension 33 is blocked closing the valve 71, for example by means of an electromagnetic actuator 75.

In some embodiments, the valve 73 can be adapted to completely close the duct 71, entirely preventing the passage of oil from the first chamber 54 into the tank 65 and vice versa. In other embodiments, the valve may not completely close the duct that connects the first chamber 55 with the tank 65, so that in the case of valve malfunctioning and failure to open during normal travel of the motor vehicle, springing movements, albeit minimal, can still be performed. In this way, the flow of oil from the first chamber 55 to the tank 65, and vice versa, when the valve is closed is in any case substantially limited with respect to a condition with the valve open, so as to substantially obstruct springing movements, in particular when the motor vehicle is stationary.

As shown in the above described embodiments, the suspension locking device of each suspension is configured such that one of the two chambers (chamber 55), into which the interior of the cylinder 54 of the shock absorber is divided by piston 59 sliding therein, is fluidly coupled to the tank 65. Conversely, the second chamber 57 is fluidly coupled to the first chamber 55 through one or more passages, orifices or apertures 59A which extend through the piston. The second chamber 57 is not fluidly coupled to the tank 65 directly. Thus, locking of the suspension requires only one valve along the duct connecting the first chamber 55 to the tank 65. The tank can be arranged in any suitable position around the cylinder 54, which renders the suspension compact and reduces the cost thereof. The spring 53 can be arranged coaxial to the cylinder 54, which again results in a simple and compact structure.

The invention has been described in terms of various specific embodiments. However, it will be clear to those skilled in the art that many modifications, changes and omissions are possible without departing from the scope of the invention, defined by the appended claims.

## Claims

1. A rolling motor vehicle (1) comprising:
a frame (3);
at least one rear driving wheel (5);
a left front steered wheel (7') and a right front steered wheel (7") placed side by side in a right-left direction (L-R);
a rolling four bar linkage (11) comprising: an upper cross member (13) extending transversely to a median plane of the motor vehicle (1), in a right-left direction; a lower cross member (15) extending transversely to the median plane of the motor vehicle (1), in a right-left direction; a left upright (16'), which connects the upper cross member (13) and the lower cross member (15) to each other; a right upright (16"), which connects the upper cross member (13) and the lower cross member (15) to each other;
a left support arm (21') constrained to the left upright (16') so as to rotate with respect thereto about a respective steering axis; wherein the left front steered wheel (7') is connected to the left support arm (21') with the interposition of a left suspension (33) comprising an elastic member (53) and a shock absorber (51);
a right support arm (21") constrained to the right upright (16") so as to rotate with respect thereto about a respective steering axis; wherein the right front steered wheel (7") is connected to the right support arm (21") with the interposition of a right suspension (33) comprising an elastic member (53) and a shock absorber (51);
**characterized in that** each shock absorber comprises a cylinder (54), inside which a piston (59) is slidingly housed, which divides the interior of the cylinder into a first chamber (55) and a second chamber (57), fluidly coupled to one another through at least one flow passage (59A) extending through the piston (59);
a suspension locking device comprising, for each of said suspensions (33), a valve (73) adapted to at least partially close a communication duct (71) which fluidly connects the first chamber (55) with a tank (65), preventing a flow of viscous fluid between the chamber (55) and the tank (65).

2. The motor vehicle (1) of claim 1, wherein the at least one flow passage (59A) comprises a plurality of flow passages.

3. The motor vehicle (1) of claim 1 or 2, wherein said valve (73) is operated by an electrically controlled actuator.

4. The motor vehicle (1) of claim 1 or 2 or 3, further comprising a four bar linkage locking device, preferably a brake (40) adapted to block the movement of the four bar linkage (11) with respect to the frame (3).

5. The motor vehicle (1) of claim 4, wherein the brake comprises an electrically controlled electro-mechanical actuator.

6. The motor vehicle (1) of claim 5, wherein the electrically controlled electro-mechanical actuator comprises an irreversible actuation system.

7. The motor vehicle (1) of claim 5 or 6, wherein the brake comprises a gripper (41) integral with a housing in which there are arranged an electric motor (41.1) and a reduction gear (41.2) for operation of jaws (41.3, 41.4) of the gripper.

8. The motor vehicle (1) of any one of the preceding claims, wherein the chamber (55) of the cylinder (54) of the shock absorber (51) and the tank (65) are placed side by side and connected by the duct (71).

9. The motor vehicle (1) of any one of the preceding claims, wherein the tank (65) has a variable volume.

10. The motor vehicle (1) of claim 9, wherein the tank (65) is delimited at least partially by a deformable diaphragm (69), which separates the volume (65), filled completely with viscous fluid, from a volume (67) containing a compressible fluid, the flow of viscous fluid from the chamber (55) of the cylinder (54) of the shock absorber (51) to the tank (65) and vice versa causing a deformation of the deformable diaphragm (69) and a consequent variation of the dimensions of the tank (65) containing viscous fluid and of the volume (67) containing compressible fluid.

11. The motor vehicle (1) of any one of the preceding claims, wherein the valve is a bi-stable valve.

12. The motor vehicle (1) of any one of the preceding claims, wherein the at least one flow passage (59A) comprises flow orifices (59A) which connect the first chamber (55) with the second chamber (57).

13. The motor vehicle (1) of any one of the preceding claims, wherein the piston (59) is connected to a rod (61) extending through the second chamber (57) and protruding from one side only of the cylinder (54).

14. The motor vehicle (1) of any one of the preceding claims, wherein the valve (73) is arranged along the duct (71) connecting the first chamber (55) and the tank (65) to one another.

## Patentansprüche

1. Ein rollendes Kraftfahrzeug (1), umfassend:
einen Rahmen (3);
mindestens ein hinteres Antriebsrad (5);
ein linkes gelenktes Vorderrad (7') und ein rechtes gelenktes Vorderrad (7"), die in einer Rechts-Links-Richtung (L-R) nebeneinander angeordnet sind;
ein rollendes Viergelenk (11), umfassend: einen oberen Querlenker (13), der sich quer zu einer Mittelebene des Fahrzeugs (1) in einer Rechts-Links-Richtung erstreckt; einen unteren Querlenker (15), der sich quer zu der Mittelebene des Fahrzeugs (1) in einer Rechts-Links-Richtung erstreckt; einen linken Ständer (16'), der den oberen Querträger (13) und den unteren Querträger (15) miteinander verbindet; einen rechten Ständer (16"), der den oberen Querträger (13) und den unteren Querträger (15) miteinander verbindet;
einen linken Stützarm (21'), der an dem linken Ständer (16') befestigt ist, sodass er sich in Bezug auf diesen um eine jeweilige Lenkachse dreht; wobei das linke gelenkte Vorderrad (7') mit dem linken Stützarm (21') verbunden ist, wobei eine linke Aufhängung (33) dazwischen angeordnet ist, umfassend ein elastisches Element (53) und einen Stoßdämpfer (51);
einen rechter Stützarm (21"), der an dem rechten Ständer (16") befestigt ist, sodass er sich in Bezug auf diesen um eine jeweilige Lenkachse dreht; wobei das rechte gelenkte Vorderrad (7") mit dem rechten Stützarm (21") verbunden ist, wobei eine rechte Aufhängung (33) dazwischen angeordnet ist, umfassend ein elastisches Element (53) und einen Stoßdämpfer (51);
**dadurch gekennzeichnet, dass** jeder Stoßdämpfer einen Zylinder (54) umfasst, in dessen Inneren ein Kolben (59) verschiebbar aufgenommen ist, der das Innere des Zylinders in eine erste Kammer (55) und eine zweite Kammer (57) unterteilt, die über mindestens einen Strömungskanal (59A), der sich durch den Kolben (59) erstreckt, in Fluidverbindung miteinander stehen;
eine Vorrichtung zum Verriegeln der Aufhängung, umfassend für jede der Aufhängungen (33) ein Ventil (73), ausgebildet zum zumindest teilweisen Verschließen eines Verbindungskanals (71), der die erste Kammer (55) in Fluidverbindung mit einem Tank (65) bringt, wodurch ein Fließen von viskosem Fluid zwischen der Kammer (55) und dem Tank (65) verhindert wird.

2. Kraftfahrzeug (1) gemäß Anspruch 1, wobei der mindestens eine Strömungskanal (59A) eine Vielzahl von Strömungskanälen umfasst.

3. Kraftfahrzeug (1) gemäß Anspruch 1 oder 2, wobei das Ventil (73) durch einen elektrisch gesteuerten Aktuator betätigt wird.

4. Kraftfahrzeug (1) gemäß Anspruch 1 oder 2 oder 3, des Weiteren umfassend eine Vorrichtung zum Verriegeln des Viergelenkgestänges, vorzugsweise eine Bremse (40), ausgebildet zum Blockieren der Bewegung des Viergelenkgestänges (11) in Bezug auf den Rahmen (3).

5. Kraftfahrzeug (1) gemäß Anspruch 4, wobei die Bremse einen elektrisch gesteuerten elektromechanischen Aktuator umfasst.

6. Kraftfahrzeug (1) gemäß Anspruch 5, wobei der elektrisch gesteuerte elektromechanische Aktuator ein irreversibles Betätigungssystem umfasst.

7. Kraftfahrzeug (1) gemäß Anspruch 5 oder 6, wobei die Bremse einen Greifer (41) umfasst, der einstückig mit einem Gehäuse ausgebildet ist, in dem ein Elektromotor (41.1) und ein Untersetzungsgetriebe (41.2) zum Betätigen von Backen (41.3, 41.4) des Greifers angeordnet sind.

8. Kraftfahrzeug (1) gemäß einem der vorhergehenden Ansprüche, wobei die Kammer (55) des Zylinders (54) des Stoßdämpfers (51) und der Tank (65) nebeneinander angeordnet und durch den Kanal (71) verbunden sind.

9. Kraftfahrzeug (1) gemäß einem der vorhergehenden Ansprüche, wobei der Tank (65) ein variables Volumen aufweist.

10. Kraftfahrzeug (1) gemäß Anspruch 9, wobei der Tank (65) zumindest teilweise durch eine verformbare Membran (69) begrenzt ist, die das vollständig mit viskoser Flüssigkeit gefüllte Volumen (65) von einem Volumen (67) trennt, das eine kompressible Flüssigkeit enthält, wobei der Fluss der viskosen Flüssigkeit von der Kammer (55) des Zylinders (54) des Stoßdämpfers (51) zum Tank (65) und umgekehrt eine Verformung der verformbaren Membran (69) und eine daraus resultierende Änderung der Abmessungen des Tanks (65), der viskose Flüssigkeit enthält, und des Volumens (67), das kompressible Flüssigkeit enthält, verursacht.

11. Kraftfahrzeug (1) gemäß einem der vorhergehenden Ansprüche, wobei das Ventil ein bistabiles Ventil ist.

12. Kraftfahrzeug (1) gemäß einem der vorhergehenden Ansprüche, wobei der mindestens eine Strömungskanal (59A) Strömungsöffnungen (59A) umfasst, die die erste Kammer (55) mit der zweiten Kammer (57) verbinden.

13. Kraftfahrzeug (1) gemäß einem der vorhergehenden Ansprüche, wobei der Kolben (59) mit einer Stange (61) verbunden ist, die sich durch die zweite Kammer (57) erstreckt und nur von einer Seite des Zylinders (54) vorsteht.

14. Kraftfahrzeug (1) gemäß einem der vorhergehenden Ansprüche, wobei das Ventil (73) entlang des Kanals (71) angeordnet ist, der die erste Kammer (55) und den Tank (65) miteinander verbindet.

## Revendications

1. Un véhicule à moteur roulant (1) comprenant :
un cadre (3) ;
au moins une roue motrice arrière (5) ;
une roue avant gauche directrice (7') et une roue avant droit directrice (7") placées côte-à-côte dans une direction gauche-droite (L-R) ;
une liaison à quatre barres roulante (11) comprenant : un organe transversal supérieur (13) s'étendant perpendiculairement à un plan médian du véhicule à moteur (1), dans une direction droite-gauche ; un organe transversal inférieur (15) s'étendant perpendiculairement au plan médian du véhicule à moteur (1), dans une direction droite-gauche ; un montant gauche (16') qui connecte l'organe transversal supérieur (13) et l'organe transversal inférieur (15) l'un à l'autre ; un montant droit (16") qui connecte l'organe transversal supérieur (13) et l'organe transversal inférieur (15) l'un à l'autre ;
un bras de support gauche (21') contraint au montant gauche (16') de façon à tourner par rapport à lui autour d'une axe de direction respectif; dans lequel la roue avant gauche directrice (7') est connectée au bras de support gauche (21') par l'intermédiaire d'une suspension gauche (33) comprenant un organe élastique (53) et un absorbeur de chocs (51) ;
un bras de support droit (21") contraint au montant droit (16") de façon à tourner par rapport à lui autour d'un axe de direction respectif ; dans lequel la roue avant droite directrice (7") est connectée au bras de support droit (21") par l'intermédiaire d'une suspension droite (33) comprenant un organe élastique (53) et un absorbeur de chocs (51) ;
**caractérisé en ce que** chaque absorbeur de chocs comprend un cylindre (54) à l'intérieur duquel un piston (59) est logé à coulisse qui divise l'intérieur du cylindre en une première chambre (55) et une deuxième chambre (57), couplées de manière fluidique l'une à l'autre par le biais d'au moins un passage pour fluide (59A) s'étendant à travers le piston (59) ;
un dispositif de verrouillage de suspension comprenant, pour chacun desdites suspensions (33), une soupape (73) apte à fermer au moins partiellement un conduit de communication (71) qui connecte de manière fluidique la première chambre (55) avec un réservoir (65), empêchant la circulation de fluide visqueux entre la chambre (55) et le réservoir (65).

2. Le véhicule à moteur (1) selon la revendication 1, dans lequel le ou les passage(s) pour fluide (59A) comprend une pluralité de passages pour fluide.

3. Le véhicule à moteur (1) selon la revendication 1 ou 2, dans lequel ladite soupape (73) est actionnée par un actionneur à commande électrique.

4. Le véhicule à moteur (1) selon la revendication 1 ou 2 ou 3, comprenant en outre un dispositif de verrouillage de liaison à quatre barres, de préférence un frein (40) apte à bloquer le mouvement de la liaison à quatre barres (11) par rapport au cadre (3).

5. Le véhicule à moteur (1) selon la revendication 4, dans lequel le frein comprend un actionneur électromécanique à commande électrique.

6. Le véhicule à moteur (1) selon la revendication 5, dans lequel l'actionneur électromécanique à commande électrique comprend un système d'actionnement irréversible.

7. Le véhicule à moteur (1) selon la revendication 5 ou 6, dans lequel le frein comprend une pince (41) d'un seul tenant avec un logement dans lequel un moteur électrique (41.1) et un engrenage de réduction (41.2) sont agencés pour l'actionnement des mâchoires (41.3, 41.4) de la pince.

8. Le véhicule à moteur (1) selon l'une quelconque des revendications précédentes, dans lequel la chambre (55) du cylindre (54) de l'absorbeur de chocs (51) et le réservoir (65) sont placés côte-à-côté et connectés par le conduit (71).

9. Le véhicule à moteur (1) selon l'une quelconque des revendications précédentes, dans lequel le réservoir (65) a un volume variable.

10. Le véhicule à moteur (1) selon la revendication 9, dans lequel le réservoir (65) est délimité au moins partiellement par un diaphragme déformable (69), qui sépare le volume (65), rempli complètement avec un fluide visqueux, d'un volume (67) contenant un fluide compressible, la circulation du fluide visqueux de la chambre (55) du cylindre (54) de l'absorbeur de chocs (51) vers le réservoir (65) et vice-versa provoquant une déformation du diaphragme déformable (69) et une variation consécutive des dimensions du réservoir (65) contenant le fluide visqueux et du volume (67) contenant le fluide compressible.

11. Le véhicule à moteur (1) selon l'une quelconque des revendications précédentes, dans lequel la soupape est une soupape bistable.

12. Le véhicule à moteur (1) selon l'une quelconque des revendications précédentes, dans lequel le ou les passage(s) pour fluide (59A) comprend(comprennent) des orifices de circulation (59A) qui connectent la première chambre (55) à la deuxième chambre (57).

13. Le véhicule à moteur (1) selon l'une quelconque des revendications précédentes, dans lequel le piston (59) est connecté à une tige (61) s'étendant à travers la deuxième chambre (57) et faisant saillie depuis un côté seulement du cylindre (54).

14. Le véhicule à moteur (1) selon l'une quelconque des revendications précédentes, dans lequel la valve (73) est agencée le long du conduit (71) connectant la première chambre (55) et la réservoir (65) l'un à l'autre.
